# EUROPEAN PATENT SPECIFICATION

(11) **EP 2 639 463 B1**
(45) Date of publication and mention of the grant of the patent: **08.02.2017**
(21) Application number: 13157982.3
(22) Date of filing: 06.03.2013
(51) Int. Cl.: F16B 25/00, F16B 5/02, F16B 25/10

(54) **Self-tapping screw for the connection of at least two elements**
Schneidschraube zur Verbindung von mindestens zwei Elementen
Vis autotaraudeuse pour la connexion d'au moins deux éléments

(30) Priority: 13.03.2012 IT PD20120078
(43) Date of publication of application: 18.09.2013
(73) Proprietor: Heco Italia EFG S.r.l., 36061 Bassano Del Grappa (VI) (IT)
(72) Inventor: Vianello, Carlo Filippo, 36043 Camisano Vicentino (VI) (IT)
(74) Representative: Modiano, Micaela Nadia

(56) References cited:
- JP-A- 8 061 344
- JP-A- 2000 035 017
- JP-A- 2008 032 133
- US-A- 4 645 396

## Description

The present invention relates to a self-tapping screw for the connection of at least two elements.

Such a self-tapping screw is particularly adapted for applications involving wood/metal, wood/metal/wood, wood/metal/metal, wood/metal/masonry, wood/metal/plastic, and the like.

In the field of all-wood construction, or mixed wood/concrete construction, the use of structures is frequent in which there are columnar elements, known as primary components, which are provided with T-shaped brackets the cantilevered central tenon of which is adapted to be coupled with the head portion of a wooden beam, or of a wooden panel, which are secondary components, on which a corresponding seat is defined for the cantilevered central tenon.

In the wooden secondary component, the seat for the cantilevered tenon is constituted substantially by a mortise, or by a pocket, provided for example by milling and of a depth such as to accommodate the entire cantilevered tenon; such seat is provided at the center of the width of the secondary component in order to prevent eccentric loads.

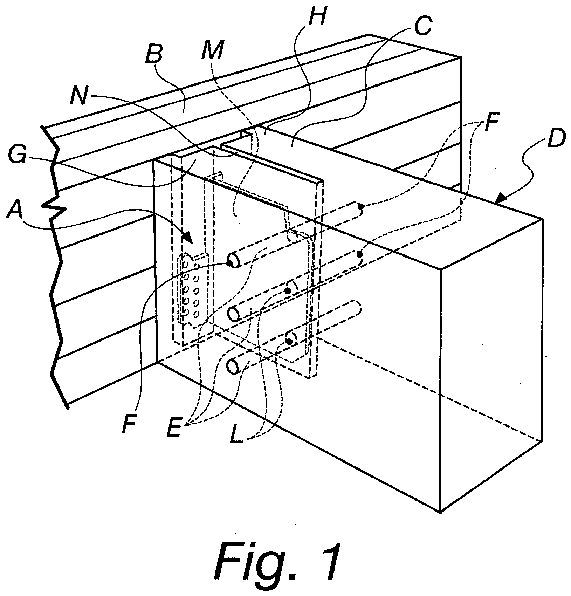

As shown in schematic form in Figure 1, which is illustrative of the known art, in order to couple the bracket A, which is already fixed to the primary component B, to the head C of the wooden beam D, traditionally smooth pins E, or bolts, or threaded bars are used, which are adapted to be inserted horizontally into corresponding first holes F that were previously provided in the two sections G and H of the head C of the beam D, and in corresponding second holes L made in the intermediate cantilevered tenon M, where the two sections G and H are defined by the interposed seat N for the cantilevered tenon M.

The technical regulations in force for wooden constructions prescribe a diameter of the hole in the wood which is as far as possible equal to the diameter of the smooth shank of the pin, while for the hole in the cantilevered metallic tenon a maximum tolerance of 1 mm is accepted between the diameter of the hole and the diameter of the shank of the pin.

The same regulations indicate that the minimum diameter for structural applications is a diameter of Ø 6.0 mm for the smooth part of the shank, and steel of S235 grade.

Such fixing systems with pins and ready-made holes have the advantage of being relatively inexpensive to purchase and implement, but they have the disadvantage that it is necessary to make holes in advance, both in the wood and in the metal of the cantilevered tenon.

Given the significant sizes of the primary and secondary components in play and the tolerances applied in building construction, for practical reasons these holes are almost always made on-site, an environment in which it is practically impossible to use digitally controlled machinery that can guarantee the perfect perpendicularity of the hole with respect to the cantilevered tenon.

The result is that often, the pins are mounted with an inclination that is not as per the design, with consequent problems of eccentricity of loads and stresses in general.

Nowadays pins are available on the market which make it possible to avoid making holes in advance.

Such pins are constituted by a smooth shank which is provided, at one end, with a notch in which a special, high-strength steel blade is interlocked and/or welded which is adapted to perforate both the wood and the cantilevered metallic tenon.

The blade of the pin is made to create a hole of the same size as the diameter of the smooth shank.

At the end of the shank which is opposite to the blade, there is a portion of threading the sole function of which is to not allow the pin to move axially inside the hole in the wood.

Such pins, although widespread, have considerable drawbacks which are linked to the connection between the shank and the cutting blade; in fact, owing to the heat generated by the cutting action, the twist forces transmitted between shank and blade, and the pressure caused by the accumulation of the shavings produced by the perforation process, it often happens that the blade separates from the shank.

This leads to the inconvenient substitution of the broken pin with another, new one in order to finish the job, with the added inconvenience of having to pull the blade that has separated from the shank out of the hole that is being made.

Such problem can affect a percentage of between 10% and 15% of pieces, but this increases appreciably if the direction of insertion of the pins is not perpendicular to the cantilevered metallic tenon, or with the increase in quality of the metal of the cantilevered tenon.

Another drawback of conventional pins is related to their applications in structures that may be subject to fires.

In fact, owing to the action of fire the cross-section of the wooden secondary component, for example a beam, reduces quite rapidly, and the portion of threading of the pin with the perforation blade attached is positioned proximate to the outer layer of the wooden beam, because it is close to the head of the pin.

Such portion of threading, the function of which is to prevent the axial movement of the pin in the holes in which it is inserted, loses its effectiveness in charred wood, with consequent risk of extraction right at the most critical moment for the structure that is on fire.

Another drawback of conventional pins is that they do not cause a stable fastening of the head of the wooden beam to the cantilevered metallic tenon; in fact between the cantilevered tenon and the inner faces of its seat in the head of the beam there is a play which conventional pins do not cancel out, since the threaded portion under the head engages only the outer layer and thus does not establish a connection in the direction of the axis of the pin between the layer of wood of the head of the beam and the metallic layer of the cantilevered tenon of the bracket.

Also available on the market are screws which are provided with a self-tapping tip for the perforation of metal which is made by molding, and with a threading that extends for over half of the shank, which begins immediately after the self-tapping tip.

Such threading enables the screw to be fixed to a metallic layer underlying a first layer of another material, for example wood.

Such a screw is not adapted to be used for fixing wooden secondary components to the cantilevered metallic tenon of a bracket which is fixed to a primary component as described above and shown in Figure 1, owing to the presence of the threading on more than half of the length of the screw, for two reasons which are explained below.

A first reason is that the speed of perforation/penetration of the tip in the metal is much lower than the speed of insertion of the threading, and this means that, at the moment when the tip of the screw, after having passed through the first section of the head of the wooden beam, begins to perforate the metallic tenon, the threading grinds the wood around the threading and ruins the hole in the wood by excessively increasing its effective diameter.

A second reason is that in such conventional screws, the effective diameter of the self-tapping tip is smaller than the outer diameter of the threaded portion, so that the threading can tap the hole in the metallic tenon.

However, this involves a difference between the effective diameter of the hole in the metallic tenon and the inner diameter of the threading of the screw (effective diameter) that exceeds the maximum differential allowed by the technical regulations for wooden constructions, i.e. 1 mm.

Moreover, such conventional screws are typically made either with a reduced length, or with a diameter that is much smaller than the minimums specified by the regulations for calculating and verifying wooden structures, for the reason that these screws do not have specific systems for the discharge of the shavings created by the perforation of the wood and/or of the metal.

Examples of self-tapping screws having a combination of features as defined in the pre-characterizing portion of the appended claim 1 are disclosed in JP 2008 032133 A, US 4 645 396 A, JP 2000 035017 A, and JP 8 061344 A.

The aim of the present invention is to provide a self-tapping screw for the connection of at least two elements, which is capable of overcoming the above-mentioned drawbacks of the known art.

Within this aim, an object of the invention is to provide a screw that is capable of ensuring the fastening of two thick elements onto each other, while at the same time executing a correct and effective perforation of all the layers concerned.

Another object of the invention is to provide a self-tapping screw the tip of which is more robust and effective than the tips of conventional pins.

Another object of the invention is to provide a self-tapping screw that is capable of remaining in position even in the event of fire in a wooden structure in which it is mounted.

Another object of the invention is to provide a self-tapping screw that is capable of stably coupling a head of a wooden beam with a corresponding metallic bracket also in the direction of the axis of the screw.

Another object of the invention is to provide a self-tapping screw that is capable of mutually coupling two parts of considerable thickness.

Another object of the invention is to provide a self-tapping screw for the connection of at least two elements, which can be made using conventional systems and technologies.

In accordance with the invention, there is provided a self-tapping screw as defined in the appended claims.

Further characteristics and advantages of the invention will become more apparent from the description of three preferred, but not exclusive, embodiments of the self-tapping screw according to the invention, illustrated by way of nonlimiting example in the accompanying drawings wherein:
Figure 1 is a perspective view of a system of fixing between a wooden beam and a metallic bracket according to the known art;
Figure 2 is a schematic side view of a self-tapping screw according to the invention in a first application thereof;
Figure 3 is a side view of a self-tapping screw according to the invention in a first embodiment thereof;
Figure 4 is a schematic side view of a self-tapping screw according to the invention in a second application thereof;
Figure 5 is a schematic side view of a self-tapping screw according to the invention in a third application thereof;
Figure 6 is a view of a self-tapping screw according to the invention in a second embodiment thereof;
Figure 7 is a view of a self-tapping screw according to the invention in a third embodiment thereof.

With reference to the figures, a self-tapping screw according to the invention is generally designated with the reference numeral 10.

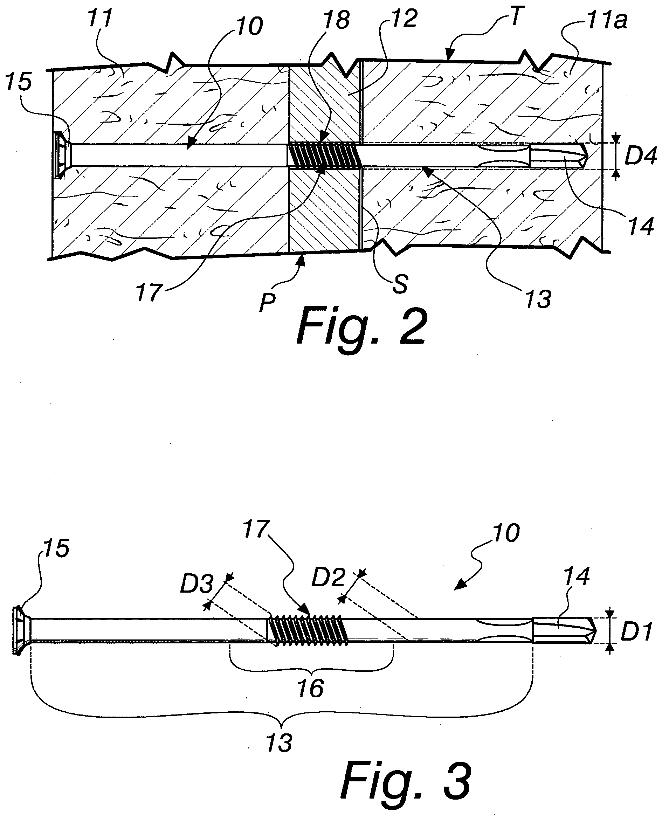

An example of such a self-tapping screw 10 is shown in Figure 2 used to connect a wooden element 11 and a metallic element 12, for example steel, where the wooden element 11, together with the identical opposing element 11a, are understood to be parts of a head of a wooden beam T, while the element made of metallic material 12 is a cantilevered metallic tenon P of a supporting bracket, which is inserted with play in a seat S formed on the wooden head T.

The self-tapping screw 10 comprises a cylindrical shank 13, from which the following protrude, monolithically therewith: at a first end a tip for the perforation of elements of wood 11 and of metal 12, and at the opposite, second end a stroke limiting head 15.

In the first embodiment of the self-tapping screw according to the invention 10, in the intermediate region 16 of the shank 13 there is a threaded portion 17 for self-screwing into a corresponding hole 18 that is formed in the inner element 12, i.e. the metallic layer.

The shank 13 is thus placed in traction between the head 15 and the threaded portion 17, and the wooden element 11 is pressed between the head and the inner metallic element 12; in this manner a stable fixing is obtained between the wooden head T and the metallic tenon P, with cancellation of the play between the elements of wood 11 and of metal 12.

This means that the beam T will not move in the direction of the axis of the self-tapping screw 10, where movements and vibrations would be possible owing to the presence of working tolerances for example on the seat S for the tenon P, whereas such movements and vibrations are possible with the use of conventional pins.

In such embodiment described herein, the tip 14 is adapted to perforate metallic materials, but it is understood that it can also be implemented for the perforation of other materials according to the desired use of the self-tapping screw according to the invention.

The tip 14 has an outer diameter D1 which is larger than the outer diameter D2 of the shank 13.

According to the regulations in force, the difference between the outer diameter D1 of the tip 14 and the outer diameter D2 of the shank 13 is not greater than 1 millimeter.

The threaded portion 17 has an outer diameter D3 which is larger than the diameter D4 of the hole 18 created by the tip 14, so as to ensure the self-screwing of the threaded portion 17 in the hole 18.

In the first embodiment of the self-tapping screw 10 there is a single threaded portion 17.

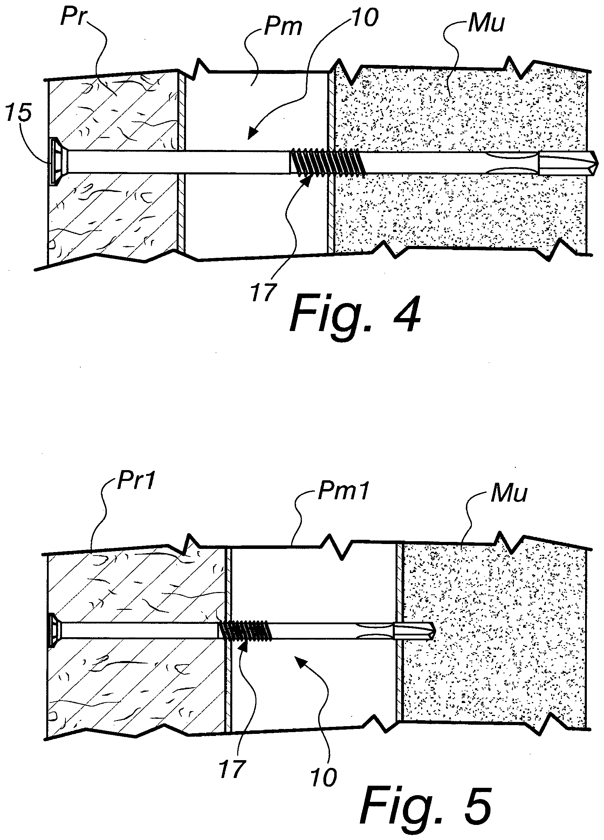

The self-tapping screw 10 is also shown applied for other uses, as in Figures 4 and 5.

In Figure 4 the self-tapping screw 10 is used to fix a covering panel PR to a wall MU by interposition of a metallic profile PM, for example in order to form a ventilated cladding or a ventilated facade.

The threaded portion 17 is shown as directly coupling the metallic profile PM to the wall MU, while the head 15 retains the covering panel PR against the metallic profile PM.

In the example of application in Figure 5, the covering panel PR1 is thicker than the panel PR in Figure 4, and the metallic profile PM1 also has a larger cross-section in the direction of the axis of the screw 10 than the metallic profile PM in Figure 4; in such example the threaded portion 17 works to couple the metallic profile PM1 to the covering panel PR1.

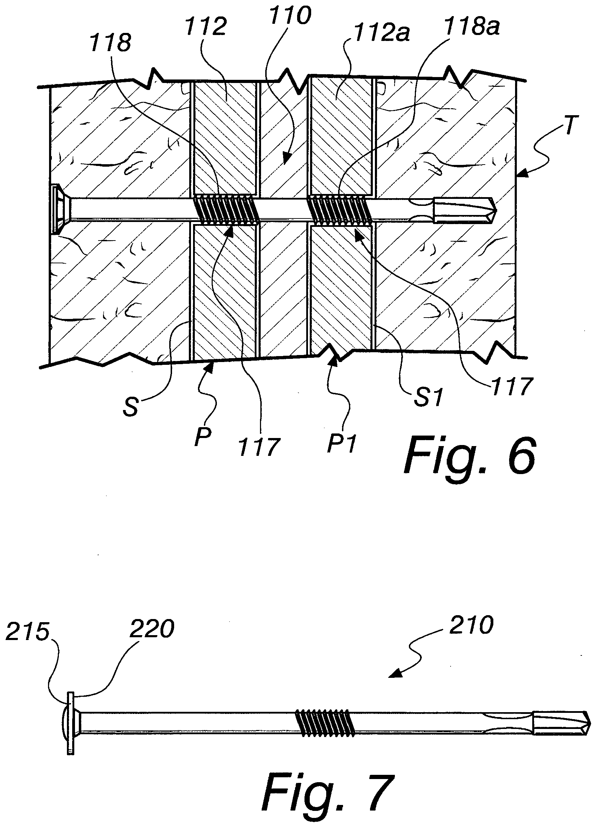

In a second embodiment thereof, shown in Figure 6, the self-tapping screw 110 has two threaded portions 117 and 117a which are mutually spaced, each one for a corresponding hole 118 and 118a of a corresponding inner metallic layer 112 and 112a.

Such embodiment lends itself well to coupling solutions between a wooden head of a beam T and a metallic bracket that is provided with two thin cantilevered metallic tenons P and PI, which are adapted to be inserted into corresponding seats S and S1 that are defined on the head of the beam T.

The head 15 is flared.

Alternatively, the head 215 has a flat underside of the head 220, as in the third embodiment of the self-tapping screw, shown in Figure 7 with the reference numeral 210.

In practice it has been found that the invention fully achieves the intended aim and objects.

In particular, the head 15 and the threaded portion 17 determine a certain amount of pressure between the first element 11, made of wood, and the second element 12, made of metallic material.

This limits the possible movements and/or vibrations for example of a wooden beam with respect to a metallic bracket, which are caused by the presence of working tolerances of the parts that are designed to be coupled.

Such a self-tapping screw 10 according to the invention, used for fixing a head of a wooden beam to a metallic supporting bracket, works both in shear and in traction, thus providing much greater strength and rigidity of the connection than the use of conventional pins.

What is more, as mentioned above, the self-tapping screw according to the invention 10 has surprisingly also been shown to be an optimal solution for applications in which the metallic part has thick layers or is constituted by a hollow profile, for example in the construction of architectural facades with exposed wooden battens.

In fact, the most widespread systems of construction for facades of wooden battens are based on building a metallic supporting substructure, with open profiles of the "Ω" or "U" type or with box profiles, as shown for example in Figures 4 and 5, which are fixed to the outer wall, and later the external wooden elements are fixed by way of bolts, or smooth or coarse metallic pegs, which are through or are welded to the metallic supporting substructure; in the latter case, naturally the wood must conveniently have ready-made holes in order to prevent cracks or fissures.

Nowadays screws with self-tapping tips for metal are also used, but such screws, even if they are specifically for wood/metal fixing, have insufficient diameters and lengths if particularly large cross-sections of wood are used or if there are heavy strains.

The length limitation means that such screws are anchored only to the part of the metallic profile nearest to the wood, a solution that may not be sufficient, and a loosening and flexion of the fixing may occur, both owing to the weight of the wood and owing to the long-term strains.

The solution for preventing such problems is to have a screw with a long shank, so that the screw can be anchored not only to the part of the metallic profile adjacent to the wood, but also to the part of the metallic profile adjacent to the masonry, or directly to the masonry.

Such a screw cannot however have a threading over the entire length of its shank, because at the moment when the self-tapping tip begins to perforate the part of metallic profile adjacent to the masonry, or the masonry itself if open profiles are being used, the threading is inside the part of profile adjacent to the wood, and the tension created will lead either to the breakage of the screw or to the destruction of the metallic profile.

The self-tapping screw 10 according to the invention has however, advantageously, the above-mentioned central threaded portion which makes it possible to provide the fixing determined by the threaded portion 17 either between the part of metallic profile adjacent to the wood and the wood itself, or on the part of metallic profile adjacent to the masonry and the masonry itself, so that neither the shank of the screw nor the metallic profile are subjected to undue tensions, and at the same time with the tip of the screw a second point of support and bonding is created which contributes to limiting the flexion or the progressive yielding of the fixing.

Thus, with the invention a screw has been devised that is capable of ensuring the fastening onto each other of two thick elements, while at the same time executing a correct and effective perforation of all the layers concerned.

What is more, with the invention a self-tapping screw has been devised the tip of which is more robust and effective than the tips of conventional pins, thanks to the fact that it is monolithic with the shank and head of the screw.

Moreover, with the invention a self-tapping screw has been devised which is capable of remaining in position even in the event of fire in a wooden structure in which it is mounted, thanks to the threaded portion in the central region which is adapted to self-screw into the central cantilevered metallic tenon, and not into the wooden head of the beam in a coupling between a metallic supporting bracket and a beam head in an all-wood construction or in mixed wood/concrete or wood/metal constructions.

Moreover with the invention a self-tapping screw has been devised which is capable of stably coupling a head of a wooden beam with a corresponding metallic bracket also in the direction of the axis of the screw.

In addition, with the invention a self-tapping screw has been devised for the connection of at least two layers of different materials, which can be made using conventional systems and technologies.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A self-tapping screw (10) for the connection of at least two elements (11, 12), comprising a cylindrical shank (13) from which the following protrude, monolithically therewith: at a first end a tip (14) with a diameter D1 for perforating all the elements (11, 12) intended to be affected by said self-tapping screw (10), and at the opposite, second end a stroke limiting head (15), in the intermediate region (16) of said shank (13) at least one threaded portion (17) being provided for self-screwing into a corresponding hole (18) which is formed in an internal element (12) of said at least two elements (11, 12), **characterized in that** said shank (13) is arranged in traction between said head (15) and said threaded portion (17), said tip (14) has an outer diameter (D1) which is larger than the outer diameter (D2) of said shank (13), and said at least one threaded portion (17) has an outer diameter (D3) that is larger than the diameter (D4) of the hole (18) created by the tip (14).

2. The self-tapping screw according to claim 1, **characterized in that** said tip (14) is adapted to perforate metallic materials or other building materials.

3. The self-tapping screw according to the preceding claims, **characterized in that** the difference between said outer diameter (D1) of said tip (14) and said outer diameter (D2) of said stem (13) is not greater than 1 millimeter.

4. The self-tapping screw according to the preceding claims, **characterized in that** it has a single threaded portion (17).

5. The self-tapping screw according to claims 1 to 3, **characterized in that** it has two threaded portions (117, 117a) which are mutually spaced, each one for a corresponding hole (118, 118a) of a corresponding metallic layer.

6. The self-tapping screw according to the preceding claims, **characterized in that** said head (15) is flared.

7. The self-tapping screw according to claims 1 to 5, **characterized in that** said head (215) has a flat underside of the head (220).

## Patentansprüche

1. Schneidschraube (10) zur Verbindung von mindestens zwei Elementen (11, 12), umfassend einen zylindrischen Kolben (13), aus welchem daraus monolithisch das folgende vorsteht: an einem ersten Ende eine Spitze (14) mit einem Durchmesser D1 zum Durchstoßen sämtlicher Elemente (11, 12), von denen vorgesehen ist, dass sie durch die Schneidschraube (10) beaufschlagt werden, und an dem gegenüberliegenden, zweiten Ende ein Schlag-begrenzender Kopf (15), wobei in dem Zwischenbereich (16) des Kolbens (13) zumindest ein Gewindeabschnitt (17) zum Schneidschrauben in ein entsprechendes Loch (18) bereitgestellt ist, welches in einem inneren Element (12) der zumindest zwei Elemente (11, 12) gebildet ist, **dadurch gekennzeichnet, dass** der Kolben (13) in Traktion zwischen dem Kopf (15) und dem Gewindeabschnitt (17) angeordnet ist, die Spitze (14) einen Außendurchmesser (D1) aufweist, welcher größer ist als der Außendurchmesser (D2) des Kolbens (13), und der zumindest eine Gewindeabschnitt (17) einen Außendurchmesser (D3) aufweist, welcher größer als der Durchmesser (D4) des Lochs (18) ist, das durch die Spitze (14) geschaffen wird.

2. Schneidschraube nach Anspruch 1, **dadurch gekennzeichnet, dass** die Spitze (14) ausgelegt ist, metallische Materialien oder andere Baumaterialien zu durchdringen.

3. Schneidschraube nach den vorhergehenden Ansprüchen, **dadurch gekennzeichnet, dass** der Unterschied zwischen dem äußeren Durchmesser (D1) der Spitze (14) und dem Außendurchmesser (D2) des Kolbens (13) nicht größer als 1 Millimeter ist.

4. Schneidschraube nach den vorhergehenden Ansprüchen, **dadurch gekennzeichnet, dass** sie einen einzelnen Gewindeabschnitt (17) aufweist.

5. Schneidschraube nach den Ansprüchen 1 bis 3, **dadurch gekennzeichnet, dass** sie zwei Gewindeabschnitte (117, 117a) aufweist, welche wechselseitig beabstandet sind, jeder für ein entsprechendes Loch (118, 118a) einer entsprechenden Metallschicht.

6. Schneidschraube nach den vorhergehenden Ansprüchen, **dadurch gekennzeichnet, dass** der Kopf (15) aufgebördelt ist.

7. Schneidschraube nach den Ansprüchen 1 bis 5, **dadurch gekennzeichnet, dass** der Kopf (215) eine flache Unterseite des Kopfes (220) aufweist.

## Revendications

1. Vis autotaraudeuse (10) pour raccorder au moins deux éléments (11, 12), comprenant une tige cylindrique (13) prolongée de manière monolithique par : à une première extrémité, une pointe (14) de diamètre D1 pour perforer tous les éléments (11, 12) destinés à être affectés par ladite vis autotaraudeuse (10) et, à l'autre extrémité, opposée, une tête (15) limitant la course, la zone intermédiaire (16) de ladite tige (13) étant pourvue d'au moins une partie filetée (17) pour l'autovissage dans un trou (18) correspondant formé dans un élément interne (12) desdits au moins deux éléments (11, 12), **caractérisée en ce que** ladite tige (13) est disposée en traction entre ladite tête (15) et ladite partie filetée (17), ladite pointe (14) présente un diamètre extérieur (D1) supérieur au diamètre extérieur (D2) de ladite tige (13), et ladite au moins une partie filetée (17) présente un diamètre extérieur (D3) supérieur au diamètre (D4) du trou (18) créé par la pointe (14).

2. Vis autotaraudeuse selon la revendication 1, **caractérisée en ce que** ladite pointe (14) est apte à perforer les matériaux métalliques ou d'autres matériaux de construction.

3. Vis autotaraudeuse selon les revendications précédentes, **caractérisée par** une différence inférieure ou égale à 1 millimètre entre ledit diamètre extérieur (D1) de ladite pointe (14) et ledit diamètre extérieur (D2) de ladite tige (13).

4. Vis autotaraudeuse selon les revendications précédentes, **caractérisée en ce qu'**elle possède une seule partie filetée (17).

5. Vis autotaraudeuse selon les revendications 1 à 3, **caractérisée en ce qu'**elle possède deux parties filetées (117, 117a) espacées l'une de l'autre, chacune destinée à un trou (118, 118a) correspondant d'une couche métallique correspondante.

6. Vis autotaraudeuse selon les revendications précédentes, **caractérisée en ce que** ladite tête (15) est évasée.

7. Vis autotaraudeuse selon les revendications 1 à 5, **caractérisée en ce que** ladite tête (215) présente une face inférieure plane (220).
